# EUROPÄISCHE PATENTSCHRIFT

(11) **EP 1 238 214 B1**
(45) Veröffentlichungstag und Bekanntmachung des Hinweises auf die Patenterteilung: **22.09.2004**
(21) Anmeldenummer: 01982181.8
(22) Anmeldetag: 04.10.2001
(51) Int. Cl.: F16H 59/02

(54) **SENSORIKSYSTEM FÜR DIE STEUEREINRICHTUNG EINES AUTOMATISCH SCHALTBAREN GETRIEBES**
SENSOR SYSTEM FOR THE CONTROL OF AN AUTOMATIC TRANSMISSION
SYSTEME DE DETECTION DESTINE AU DISPOSITIF DE COMMANDE D'UNE BOITE DE VITESSES AUTOMATIQUE

(30) Priorität: 04.10.2000 DE 10049307
(43) Veröffentlichungstag der Anmeldung: 11.09.2002
(73) Patentinhaber: ZF Lemförder Metallwaren AG, 49441 Lemförde (DE)
(72) Erfinder: KLIEMANNEL, Wolfgang, 49448 Lemförde (DE); BOSSE, Rolf, 38440 Wolfsburg (DE)
(86) Internationale Anmeldenummer: PCT/DE2001/003794
(87) Internationale Veröffentlichungsnummer: WO 2002/029288

(56) Entgegenhaltungen:
- EP-A- 0 794 362
- WO-A-99/03696
- DE-A- 19 653 193
- DE-A- 19 905 627
- DE-A- 19 938 528
- DE-C- 19 603 197

## Beschreibung

Die Erfindung betrifft ein Sensorik-System für die Steuereinrichtung eines automatisch schaltbaren Getriebes, insbesondere für ein automatisiertes Handschaltgetriebe, mit einem in zumindest einer Schaltgasse bewegbaren Schalt-Wählhebel zur Einstellung zumindest der Positionen Vorwärts (E), Neutral (N), Rückwärts (R), vorzugsweise zur zusätzlichen Einstellung einer Parksperre (STOP) vorzugsweise einer Position (M) für manuelle Schaltungen, und zumindest einer Position (+) zum manuellen Hochschalten und/oder einer Position (-) zum manuellen Herunterschalten der Getriebegänge, wobei zur Ermittlung der Stellung des Schalt-Wählhebels jeder Positionsmöglichkeit (E, N bzw. R) mindestens ein erstes Sensorelement zugeordnet ist und am Schalt-Wählhebel mindestens ein erster Signalgeber angeordnet ist.

Die bisher im Stand der Technik bekannten Schaltgassen haben zur Gangbegrenzung, d.h. zur Einstellung der exakten Position des Schalt-Wählhebels innerhalb der Schaltgasse entsprechende Ausnehmungen, so daß die Stellung des Schalt-Wählhebels immer begrenzt wird bzw. definiert ist. Bei den neueren im Stand der Technik bekannten Schalt-Wählhebeln entfällt teilweise diese Gangbegrenzung, insbesondere dann, wenn das Schaltgetriebe als automatisiertes Schaltgetriebe ausgeführt ist und eine "Tipp-Schaltbetätigung" verwendet wird. Hier kann der Fahrer manuell über die Tippgasse die Getriebegänge herunterschalten bzw. heraufschalten. Die so realisierte "Tippschaltung" schaltet bei Betätigung der entsprechenden Tipptaste bzw. des entsprechenden Tippschalters ein Massepotential an einen Eingang des Steuergerätes. Hierbei handelt es sich bei den Tippschaltern der "Tippschaltung" im allgemeinen um erste Sensorelemente, die als Hall-Elemente bzw. Hall-Positionsgeber oder Hall-Schalter ausgeführt, in der Schaltabdeckung vorgesehen sind und durch einen ersten Signalgeber, der vorzugsweise als Permanentmagnet ausgeführt ist, betätigt bzw. ausgelöst werden können. Hierbei ist zunächst problematisch, daß diese als Hall-Positionsgeber ausgeführten ersten Sensorelemente derzeit noch nicht optimal diagnostiziert werden können, also nicht immer optimal festgestellt werden kann, ob diese in einem bestimmten Moment auch noch funktionsfähig sind, so daß aus Sicherheitsgründen nicht immer auf die entsprechende Gangbegrenzung, also die eingangs erwähnten Ausnehmungen in einer Schaltgasse verzichtet werden kann.

Um dieser Problematik vorzubeugen bzw. diese Problematik zu lösen, sind im Stand der Technik mehrere Sensorik-Systeme für Steuereinrichtungen bekannt, insbesondere wird eine Steuereinrichtung in der noch nicht veröffentlichten Patentanmeldung DE 199 38 528 beschrieben, bei der eine "dynamische Diagnose" erfolgt, wenn der Schalt-Wählhebel außerhalb der Position "M" für manuelle Schaltungen, nämlich außerhalb der Tippgasse bewegt wird. Hierzu sind in der Tippgasse Hall-Positionsgeber jeweils für den ersten und zweiten Tippschalter sowie für die Position "M" zwischen dem ersten und zweiten Tippschalter vorgesehen, die mit einem ersten, einem Schalt-Wählhebel zugeordneten Signalgeber, der als Dauermagnet ausgeführt ist, entsprechend ausgelöst werden können. Zusätzlich ist ein zweiter Dauermagnet - als Prüfmagnet - vorgesehen. Eine separat vorgesehene Auswerteschaltung mit einem Sequenzgenerator erzeugt hier die entsprechenden Signale aufgrund der anliegenden Prüfsignale. In dem Moment, wo alle Hall-Positionsgeber als einwandfrei detektiert werden, nämlich das entsprechende Frequenzmuster vorliegt, kann dann der Schalt-Wählhebel von der Position Vorwärts (E) in die Position "M" für manuelle Schaltungen eingelegt werden. Liegt nach der "dynamischen Diagnose" aller Hall-Positionsgeber das entsprechende Frequenzmuster nicht an, so wird detektiert, daß mindestens ein Hall-Positionsgeber bzw. eine diesem Hall-Positionsgeber zugeordnete Steuerleitung eben nicht einwandfrei funktioniert und es erfolgt - vor der Einlegung des Wählhebels in die Position "M" für manuelle Schaltungen - ein akustisches und/oder optisches Warnsignal für den Fahrer, zur Anzeige, daß die manuellen Schaltbetätigungen hier nicht funktionieren.

Einerseits ist die oben beschriebene "dynamische Diagnose" der bekannten Steuereinrichtung bzw. des hier beschriebenen Sensorik-Systems noch nicht optimal ausgebildet, andererseits ist zusätzlich von Nachteil bzw. problematisch, daß die Fahrer der Kraftfahrzeuge dazu neigen, ihre Hand während der Fahrt des Kraftfahrzeuges auf dem Schalt-Wählhebel ruhen zu lassen. Hierdurch bedingt kann es vorkommen, daß der Schalt-Wählhebel leicht verschoben wird, also bspw. aus der Position Vorwärts (E) in die Position Neutral (N) oder auch aus der Position Neutral (N) in Richtung der Position Rückwärts (R) verschoben wird. Dieses bedeutet, daß der Schalt-Wählhebel dann eine "Zwischenposition" zwischen den eigentlich definierten Positionen Vorwärts E, Neutral N bzw. Rückwärts R einnimmt. Dies kann sicherheitstechnisch ungünstig sein, da das Steuergerät zur Realisierung der entsprechenden vom Fahrer gewünschten Getriebeschaltzustände hier Signale seitens der vom Schalt-Wählhebel eingelegten "Zwischenposition" überhaupt nicht mehr empfängt, ja dem Steuergerät weder gemeldet wird, daß der Schalt-Wählhebel in der Position "N", also in der Neutralstellung noch in der Position "R" für Rückwärts eingelegt ist, d.h. das Steuergerät also nicht zu jedem Zeitpunkt immer die genaue Position des Schalt-Wählhebel ermitteln kann.

Aus der DE 196 53 193 A1 ist eine Anordnung zum Erfassen der Stellung eines Wählhebels oder Schalthebels in einem Kraftfahrzeug bekannt, dessen Stellung durch eine Erkennungseinrichtung erfasst und über eine Signalleitung als Positionssignal an eine Gertriebesteuerung übermittelt wird. Das Positionssignal ist binär codiert und weist eine zum Wiedergeben der möglichen Anzahl von Hebelstellungen notwendige Anzahl Bits auf. Die Erkennungseinrichtung ist durch eine zusätzliche Ausgangssignalleitung, über die ein Codesignal übermittelt wird, mit der Getriebesteuerung verbunden. Das Codesignal dient der Erkennung und Korrektur von Bitfehlern im Positionssignal, indem das Codesignal eine zusätzliche, binär codierte Information zu dem betreffenden Positionssignal enthält.

Der Einsatz einer solchen Anordnung ist auf eine weitgehende Funktionssicherheit bei Auftreten temporärer Signalfehler gerichtet und bleibt daher auf Systeme mit einer derartigen Fehlerstruktur begrenzt.

Der Erfindung liegt daher die Aufgabe zugrunde, das bekannte Sensorik-System der eingangs genannten Art derart auszugestalten und weiterzubilden, daß die bisher bekannten Gangbegrenzungen einerseits unnötig sind, andererseits aber die durch die fahrertypspezifischen Eigenarten möglicherweise aufkommenden Schaltprobleme vermieden sind.

Die zuvor aufgezeigte Aufgabe ist nun dadurch gelöst, daß die ersten Sensorelemente und/oder der erste Signalgeber so ausgebildet und angeordnet sind, daß auch die Positionierung des Schalt-Wählhebels zumindest zwischen den Positionen Vorwärts (E), Neutral (N) und/oder Rückwärts (R) ermittelbar ist. Anders ausgedrückt, die ersten Sensorelemente und der erste Signalgeber sind so ausgebildet bzw. aufeinander abgestimmt, daß auch die eingangs erwähnten "Zwischenpositionen" des Schalt-Wählhebels, also wenn dieser zwischen einer definierten Position innerhalb der Schaltgasse steht, ermittelbar sind und somit dem Steuergerät entsprechende exakt definierte Signale zugeleitet werden können. Hierdurch werden die oben beschriebenen Nachteile, insbesondere die fahrertypspezifischen Eigenarten und die damit verbundenen schalttechnischen Probleme vermieden, wobei sich hierdurch weitere zusätzliche Vorteile, insbesondere hinsichtlich der Diagnosefähigkeit der verwendeten ersten Sensorelemente ergeben, was im folgenden noch erläutert werden soll und deutlich werden wird. Da weiterhin, neben der bereits beschriebenen Ausbildung und Anordnung der ersten Sensorelemente und/oder des ersten Signalgebers, die ersten Sensorelemente eine Haupt-Meßspur und zweite Sensorelemente eine Redundanz-Meßspur bilden, wird eine durch Redundanz abgesicherte Erkennung der jeweiligen Position des Schalthebels verwirklicht.

Es gibt nun eine Vielzahl von Möglichkeiten, das erfindungsgemäße Sensorik-System in vorteilhafter Art und Weise auszugestalten und weiterzubilden. Hierfür darf zunächst auf die dem Patentanspruch 1 nachgeordneten Patentansprüche verwiesen werden. Im einzelnen soll nun eine bevorzugte Ausführungsform des Sensorik-Systems anhand der folgenden Zeichnungen und Beschreibung näher erläutert werden. in der Zeichnung zeigt
- Fig. 1: ein Schaltschema einer Steuereinrichtung mit einem Schalt-Wählhebel für ein automatisiertes Handschaltgetriebe in einer schematisch vereinfachten Darstellung,
- Fig. 2: in schematisch vereinfachter Darstellung die Anordnung und Ausbildung der Sensorelement und der Signalgeber einschließlich der Darstellung der Erfassungs-Überlappungsbereiche für die Schaltgasse bzw. Tippgasse der Steuereinrichtung eines automatisierten Handschaltgetriebes von oben,
- Figur 3: in schematisch vereinfachter Darstellung die Anordnung der Sensorelemente und Signalgeber für die Ermittlung der Position des Schalt-Wählhebels in der Quergasse bzw. in der Endgasse in vereinfachter schematischer Darstellung,
- Figur 4a, 4b: Logiktabellen bzw. eine Auflistung der Signale für verschiedene Stellungen des Schalt-Wählhebels bei Einnahme unterschiedlicher Schaltpositionen, also entsprechende Auflistung der Signale, die dem Steuergerät gemeldet werden.

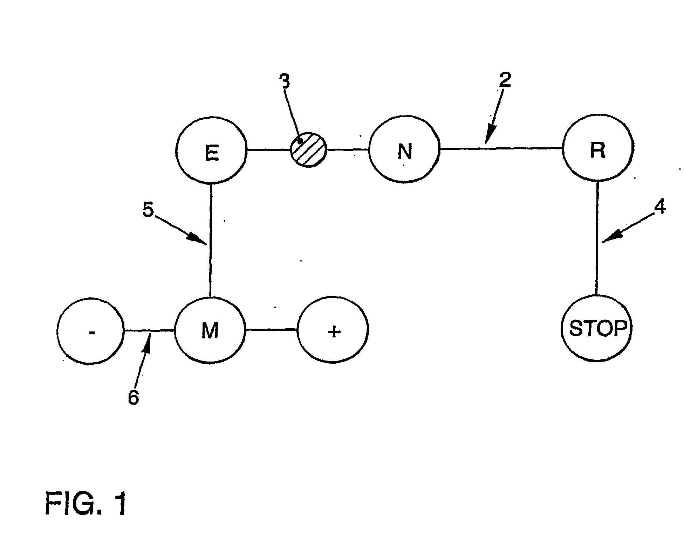

Die Figuren 1 bis 4 zeigen ein Sensorik-System 1 für eine hier nicht in allen Einzelheiten dargestellte Steuereinrichtung eines automatisch schaltbaren, hier ebenfalls nicht dargestellten Getriebes eines Kraftfahrzeuges. Das hier dargestellte Sensorik-System 1 ist insbesondere für ein automatisiertes Handschaltgetriebe ausgebildet. Grundsätzlich kann das hier dargestellte Sensorik-System 1 bei jedem automatisch schaltbaren Getriebe eines Kraftfahrzeuges zum Einsatz kommen. Anders ausgedrückt, das hier dargestellte Sensorik-System 1 kann für eine Steuereinrichtung eingesetzt werden, die einen Schalt-Wählhebel aufweist, der nur in einer einzigen Schaltgasse 2 bewegbar ist, sowie aber auch in einer Steuereinrichtung zum Einsatz kommen, wo eine Schaltgasse 2, eine Tippgasse 6 und eine Quergasse 5 vorgesehen ist. Dies wird im einzelnen noch deutlich werden.

Grundsätzlich weist die Steuereinrichtung mindestens einen in zumindest einer Schaltgasse 2 bewegbaren Schalt-Wählhebel 3 auf, was aus Figur 1 ersichtlich ist. Der Schalt-Wählhebel 3 läßt sich zur Einstellung der unterschiedlichen Getriebezustände innerhalb des Getriebes bzw. für die unterschiedlichen Fahrzustände des Kraftfahrzeuges hier zumindest in die Positionen Vorwärts E, Neutral N und Rückwärts R innerhalb der Schaltgasse 2 bewegen. Über eine Endgasse 4 ist der Schalt-Wählhebel 3 hier zusätzlich noch in die Position "STOP", beispielsweise für die Realisierung einer Parksperre, mindestens aber zur Einlegung eines Ganges innerhalb des Getriebes bewegbar. Weiterhin ist eine Quergasse 5, zusätzlich eine Position M für manuelle Schaltungen und hier innerhalb einer Tippgasse 6 eine Position "+" zum manuellen Hochschalten der Getriebegänge und eine Position "-" zum manuellen Herunterschalten der Getriebegänge vorgesehen, in die der Schalt-Wählhebel 3 bewegbar ist. Die hier in Figur 1 schematisch dargestellte Steuereinrichtung ist für ein automatisiertes Handschaltgetriebe ausgebildet, weist also eine Schaltgasse 2 und zusätzlich eine Tippgasse 6 auf, die über eine Quergasse 5 verbunden sind. Grundsätzlich ist das hier ausgebildete Sensorik-System 1 aber auch für die Steuereinrichtung eines automatisch schaltbaren Getriebes eines Kraftfahrzeuges geeignet, das beispielsweise nur eine Schaltgasse 2 aufweist.

Zur Ermittlung der Stellung des Schalt-Wählhebels 3 ist jeder Positionsmöglichkeit E, N, R bzw. "+" und "-" mindestens ein erstes Sensorelement E1, E2, N1 und R1 zugeordnet, wobei am Schalt-Wählhebel 3 mindestens ein erster Signalgeber A angeordnet ist.

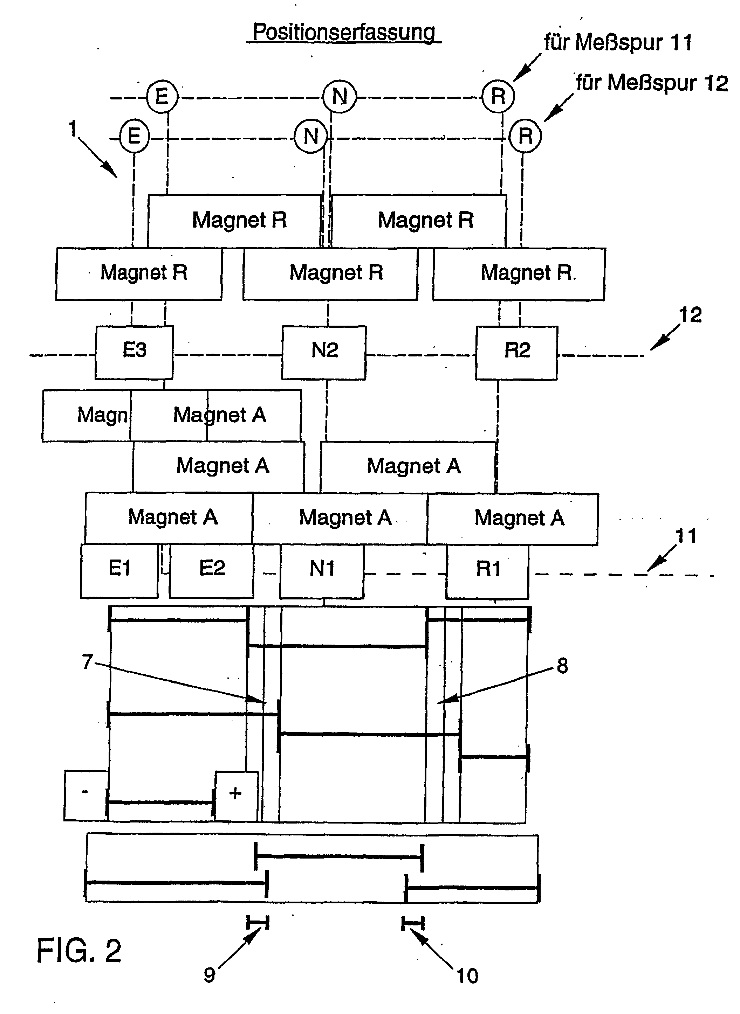

Die eingangs beschriebenen Nachteile sind nun dadurch vermieden, daß die ersten Sensorelemente E1, E2, N1 und R2 und/oder der erste Signalgeber A so ausgebildet und angeordnet sind, daß auch die Positionierung des Schalt-Wählhebels 3 zumindest zwischen den Positionen Vorwärts E, Neutral N und/oder Rückwärts R ermittelbar ist. Figur 2 zeigt deutlich die entsprechende Ausbildung bzw. Anordnung der ersten Sensorelemente E1, E2, N1 und R1 sowie des ersten Signalgebers A. Die ersten Sensorelemente E1, E2, N1 und R1 sind hier als Hall-Positionsgeber ausgebildet, wobei der erste Signalgeber A als Permanentmagnet "Magnet A" ausgebildet ist. Die Anordnung hat die Besonderheit, daß der Position Vorwärts E hier zwei erste Sensorelemente E1 und E2 zugeordnet sind, die einzeln für sich genommen auch bei entsprechender Verschiebung - was später noch deutlich werden wird - den Positionen "+" bzw. "-" zuordenbar sind.

Figur 2 zeigt deutlich, daß aufgrund der Dimensionierung und/oder Ausbildung der ersten Sensorelemente E1, E2, N1 und R2 und/oder des ersten Signalgebers A Erfassungs-Überlappungsbereiche 7 und 8 ausgebildet sind. Figur 2 zeigt deutlich den Erfassungs-Überlappungsbereich 7 zwischen den Positionen Vorwärts E und Neutral N sowie den Erfassungs-Überlappungsbereich 8 zwischen den Positionen Neutral N und Rückwärts R.

Grundsätzlich ist denkbar, daß die Erfassungs-Überlappungsbereiche 7 und 8 auf verschiedene Weise realisiert werden. Einerseits kann durch eine entsprechende Dimensionierung des Signalgebers A - wie hier geschehen -, also durch eine entsprechend große Ausführung des Magneten A realisiert werden, daß bei einer entsprechenden Bewegung des Schalt-Wählhebels 3, beispielsweise aus der Stellung Neutral N in die Stellung Rückwärts R das erste Sensorelement R1 bereits geschaltet wird, bevor das erste Sensorelement N1 nicht mehr geschaltet wird. Es ist aber auch der umgekehrte Fall denkbar, daß entsprechend die ersten Sensorelemente E1, E2, N1 und R1 entsprechend groß dimensioniert werden, so daß der erste Signalgeber A, also hier der Magnet A entsprechend klein dimensioniert werden könnte und dennoch entsprechende Erfassungs-Überlappungsbereiche 7 und 8 realisiert sind. Dies kann ganz unterschiedlich sein. Die Erfassungs-Überlappungsbereiche 7 und 8 weisen hier kleinere nicht näher bezeichnete Teilbereiche auf, die sich aus dem Hysterese-Verhalten der Hall-Positionsgeber, also aus dem spezifischen Anschalt- und Abschaltverhalten der Sensoren ergeben.

Bei der hier gezeigten bevorzugten Ausführungsform des Sensorik-Systems 1 ist ein zusätzliches erfindungsmäßiges Prinzip realisiert. Es sind nämlich jeder Positionsmöglichkeit E, N bzw. R des Schalt-Wählhebels 3 zusätzliche zweite Sensorelemente E3, N2 und R2 zugeordnet, wobei zusätzlich ein zweiter Signalgeber R am Schalt-Wählhebel 3 angeordnet ist. Auch die zweiten Sensorelemente E3, N2, R2 sind als Hall-Positionsgeber ausgebildet, wobei der zweite Signalgeber R als Permanentmagnet "Magnet R" ausgebildet ist. Wie bereits auch schon bei den ersten Sensorelementen E1, E2, N1 und R1 bzw. dem ersten Signalgeber A werden auch aufgrund der Dimensionierung und/oder der Ausbildung der zweiten Sensorelemente E3, N2, R2 sowie des zweiten Signalgebers R entsprechende Erfassungs-Überlappungsbereiche 9 und 10 zwischen den Positionen Vorwärts E, Neutral N bzw. zwischen den Positionen Neutral N und Rückwärts R ausgebildet. Figur 2 zeigt hier im unteren Abschnitt deutlich die hier dargestellten Überlappungsbereiche, nämlich den Erfassungs-Überlappungsbereich 9 zwischen den Positionen E und N sowie den Erfassungs-Überlappungsbereich zwischen den Positionen N und R. Die im unteren Abschnitt der Figur 2 dargestellten Erfassungs-Überlappungsbereiche 7 und 8 gelten für die Zusammenwirkung des ersten Signalgebers A und der ersten Sensorelemente E1, E2, N1 und R1, wobei die Erfassungs-Überlappungsbereiche 9 und 10 sich aus der Wirkungsweise des zweiten Signalgebers R und der zweiten Sensorelemente E3, N2 und R2 ergeben. Die unterschiedlich möglichen Stellungen bzw. Bewegungen des Schalt-Wählhebels 3, die in Figur 2 dargestellt sind durch unterschiedlich mögliche Positionierungen des ersten Signalgebers A und des zweiten Signalgebers R ergeben sich aus dem oberen Teil des schematisch dargestellten Bildes der Figur 2.

Die ersten und zweiten Sensorelemente E1, E2, E3, N1, N2, R1, R2 sind an einer entsprechenden Platine angeordnet, die hier nicht dargestellt ist, die aber in dem Schalt-Wählhebelgehäuse entsprechend angeordnet ist. Diese nicht dargestellte Platine ist in Richtung der Schaltgasse 2 bzw. der Tippgasse 6 nicht bewegbar, nämlich nicht verschwenkbar ausgebildet, allerdings in Richtung der Quergasse 5 bewegbar, nämlich verschwenkbar ausgebildet, nämlich wenn der Schalt-Wählhebel 3 innerhalb der Quergasse 5 bewegt wird.

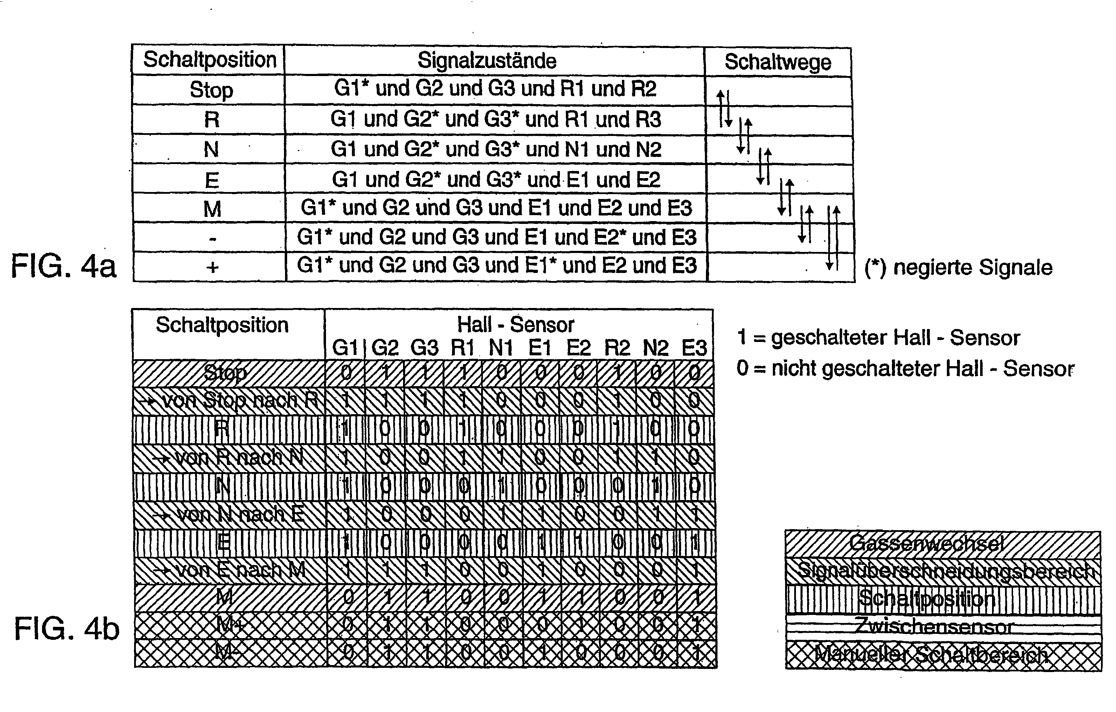

Wesentliches Merkmal der hier gezeigten Ausführungsform des Sensorik-Systems 1 ist es, daß durch die ersten Sensorelemente E1, E2, N1 und R1 eine Haupt-Meßspur 11 und durch die zweiten Sensorelemente E3, N2 und R2 eine Redundanz-Meßspur 12 gebildet ist. Aufgrund dieser beiden Meßspuren 11 und 12, nämlich der Haupt-Meßspur 11 und der Redundanz-Meßspur 12 kann der Funktionsausfall eines ersten Sensorelementes E1, E2, N1, R1 wie eines zweiten Sensorelementes E3, N2, R2 nicht nur kompensiert, sondern auch ermittelt werden (vgl. hierzu Logikschalttabelle der Figuren 4a und 4b). Hierauf soll noch näher eingegangen werden.

Wie die Figur 1 zeigt, ist der Schalt-Wählhebel 3 über eine Quergasse 5 in die Tippgasse 6 bewegbar und für die Position zum Hochschalten "+" bzw. für die Position zum Herunterschalten "-" ist jeweils ein erstes einzelnes Sensorelement E1 bzw. E2 vorgesehen (vgl. Figur 2). Die Platine, die hier nicht dargestellt ist, aber auf der alle ersten und zweiten Sensorelemente E1, E2, E3, N1, N2, R1, R2 angeordnet sind, ist nun in Richtung der Quergasse 5 innerhalb des hier nicht dargestellten Schalt-Wählhebelgehäuses bewegbar angeordnet, vorzugsweise verschwenkbar, allerdings nicht in Richtung der Tippgasse 6 bzw. Schaltgasse 2 verschwenkbar ausgeführt. Aufgrund dieser Verschwenkungsmöglichkeit kann mit Hilfe der ersten Sensorelemente E1 und E2 die Positionierung des Schalt-Wählhebels 3 in den Positionen "+" und "-" ermittelt werden.

Die Positionierung des Schalt-Wählhebels 3 innerhalb der Quergasse 5 sowie auch die Positionierung des Schalt-Wählhebels 3 innerhalb der Endgasse 4 zur Realisierung des Fahrzustandes "STOP" ist über dritte Sensorelemente G1, G2 und G3 und dritte Signalgeber, hier als "Magnet G1" und "Magnet G2" bezeichnet, ermittelbar. Auch die dritten Sensorelemente sind als Hall-Positionsgeber sowie die dritten Signalgeber als Permanentmagnete ausgebildet. Wie bereits die ersten und zweiten Sensorelemente sind auch die dritten Sensorelemente G1, G2 und G3 an der hier nicht dargestellten Platine angeordnet, wobei die dritten Signalgeber in entsprechenden Positionen am Schalt-Wählhebelgehäuse angeordnet sind, nämlich hier in bestimmten Positionen fixiert sind.

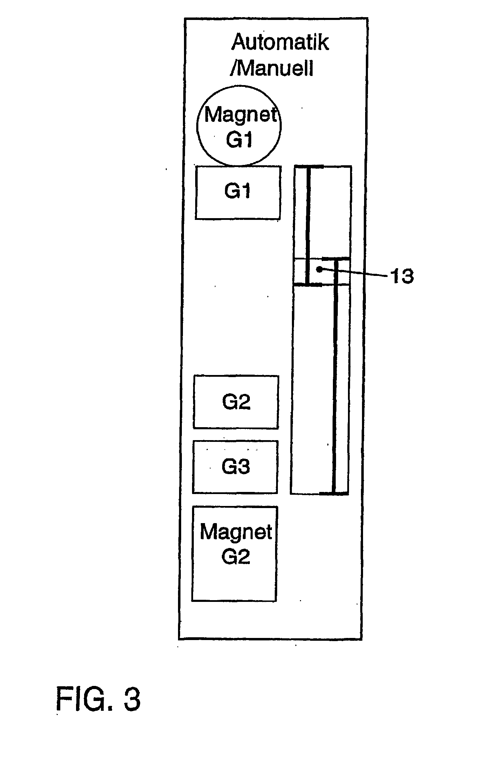

Wie die Figur 3 zeigt, ist auch durch die dritten Sensorelemente G1, G2 und G3 und die dritten Signalgeber ein Erfassungs-Überlappungsbereich 13 ausgebildet. Anders ausgedrückt, die Position des Schalt-Wählhebels 3 ist auch innerhalb der Quergasse 5 sowie innerhalb der Endgasse 4 an jeder Stelle ermittelbar, da auch hier ein Überlappungsbereich 13 aufgrund der Ausbildung und Dimensionierung der dritten Sensorelemente G1, G2, G3 sowie der dritten Signalgeber "Magnet G1" und "Magnet G2" ausgebildet ist.

In Ergänzung zu Figur 2 darf darauf hingewiesen werden, daß aufgrund der hier unterschiedlich schraffierten Bereiche die Schalt- bzw. Erfassungs-Überlappungsbereiche deutlich zu erkennen sind. Das hier in den Figuren 1 bis 4 dargestellte Sensorik-System 1 ist auf elektronischer Basis realisiert, wobei alle Sensorelemente mit einem hiernicht dargestellten Steuergerät schaltungstechnisch verbunden sind, so daß dem Steuergerät immer die aktuelle Position des Schalt-Wählhebels 3 signalisiert wird. Dies geht beispielsweise aus der in Figur 4 dargestellten Logiktabelle mit der entsprechenden hier aufgelisteten "Signal-Matrix" hervor. Von Vorteil ist, daß mit Hilfe des Steuergerätes auch ein gestörtes Sensorelement und/oder ein Kurzschluss in den hier nicht dargestellten Steuerleitungen ermittelbar ist, was im folgenden anhand der Figur 4 noch erläutert werden darf. Von besonderem Vorteil ist, daß hier die Steuereinrichtung mit Hilfe des erfindungsgemäßen Sensorik-Systems 1 als separates - alleiniges - überprüfbares Bauteil herstellbar ist, da beispielsweise die Steuereinrichtung selbst ein separates Steuergerät, das als Prozessoreinheit ausgeführt ist, aufweisen kann und dieses in dem Schalt-Wählhebelgehäuse integrierbar ist bzw. integrierbar sind. Dies hat einerseits fertigungstechnische Vorteile andererseits ist die Signalübertragung auch über einen CAN-Bus möglich.

Entscheidend ist, daß der gesamte Schaltbereich des Schalt-Wählhebels 3, nämlich dessen Positionen mit Steuerelementen, nämlich Hall-Positionsgebern erfassbar ist, wobei die Positionen der Hall-Positionsgeber und der Auslöser so festgelegt sind, daß eine Signalüberschneidung zwischen zwei benachbarten Sensorelementen, nämlich Hall-Sensoren sichergestellt ist. Folglich sind keine undefinierten Erfassungsbereiche vorhanden. Bei der bevorzugten Ausführungsform wird eine Positionserkennung des Schalt-Wählhebels 3 mit dem Abschalten des Hall-Positionsgebers der jeweils vorangegangenen Position festgelegt, was bei der Erläuterung der Figuren 4a und 4b noch deutlich wird. Um eine eindeutige Zuordnung der Schaltpositionen des Schalt-Wählhebels 3 in einem Fehlerfall eines der Sensorelemente zu ermitteln, sind in den Schaltpositionen E, N und R zusätzliche zweite Sensorelemente, die ebenfalls als Hall-Positionsgeber ausgeführt sind, parallel angeordnet, so daß ein redundantes Sicherheitssystem gebildet ist, nämlich eine redundante Signalerkennung möglich ist. Hierbei können die ersten und zweiten Sensorelemente vorteilhafterweise auf verschiedenen Ebenen angeordnet werden und von unterschiedlichen als Permanentmagneten ausgeführten ersten und zweiten Signalgebern, hier dem "Magnet R" und dem "Magnet A" geschaltet werden.

Die Figur 4a zeigt die Schalt-Logiktabelle, wobei hier der Schalt-Wählhebel 3 unterschiedliche Schaltpositionen, nämlich die Position "STOP", R, N, E, M, "-" und "+" einnehmen kann. Hierbei sind die Signalzustände der entsprechenden ersten und zweiten Sensorelemente dargestellt, wobei die mit dem "*" gekennzeichneten Signale negierte Signale, also nicht geschaltete Hall-Sensoren sind. Schließlich sind ganz rechts noch die Schaltwege des Schalt-Wählhebels 3 dargestellt.

Die in Figur 4b dargestellte Tabelle zeigt die unterschiedlich möglichen Positionen für den Schalt-Wählhebel 3 einschließlich der Signale, die anliegen, wenn der Schalt-Wählhebel 3 eine bestimmte Schaltposition einnimmt. Zusätzlich sind hier auch noch die Signale dargestellt, wenn der Schalt-Wählhebel 3 entsprechend bewegt wird, also auch die Bewegungsrichtung des Schalt-Wählhebels 3 und die sich hier dann ergebende Signalfolge ist der Figur 4b zu entnehmen. Hierbei ist ein geschalteter Hall-Sensor mit "1" bezeichnet und ein nicht geschalteter Hall-Sensor mit "0" bezeichnet. Deutlich ergibt sich aus der entsprechenden Signalfolge bzw. dem entsprechend anliegenden Signal eine eindeutige Zuordnung zu der definierten Position bzw. Schaltrichtung des Schalt-Wählhebels 3.

Die Figur 4b zeigt bzw. definiert entsprechende Signale bzw. Signalfolgen für entsprechende Bewegungen des Schalt-Wählhebels 3. Aufgrund des hier mit Hilfe des Sensorik-Systems 1 realisierten redundanten Systems, nämlich der Haupt-Meßspur 11 und der Redundanz-Meßspur 12 kann das Steuergerät bzw. ein entsprechender Prozessor den Ausfall eines einzelnen Sensors, also eines ersten, zweiten oder auch dritten Sensorelementes ermitteln, wenn bzw. ein einzelnes Sensorelement ausfällt oder auch der entsprechende Signalgeber "abfällt". Beispielsweise fällt bei dem Abfall eines Signalgebers, beispielsweise des Magneten R, die Redundanz-Meßspur 12 aus und die Signale E3, N2 und R2 bleiben immer gleich "0", da die entsprechenden Sensorelemente nicht geschaltet werden, wohingegen die ersten Sensorelemente der ersten Haupt-Meßspur 11 immer noch geschaltet werden, da der Magnet A eben nicht abgefallen ist. Aus dem dann dem Steuergerät bzw. der Prozessoreinheit zugeführten unterschiedlichen Signalen ermittelt das Steuergerät dann eine entsprechende Störung und kann dies beispielsweise dem Fahrer durch ein akustisches Warnsignal mitteilen.

Anders ausgedrückt, mit Hilfe der in der Figur 4b dargestellten Schalt-Logiktabelle sind entsprechende Signalfolgen vordefiniert, wenn der Schalt-Wählhebel 3 von einer bestimmten Schaltposition in eine andere Schaltposition bewegt wird, bzw. es sind bestimmte Signale definiert, wenn der Schalt-Wählhebel 3 eine bestimmte Schaltposition einnimmt. Mit Hilfe der Haupt-Meßspur 11 und der Redundanz-Meßspur 12 stehen quasi immer zwei Signalreihen sich gegenüber. Bei einer Änderung bzw. nicht korrektem Anliegen der Signale ermittelt das Steuergerät bzw. die Prozessoreinheit eine Fehlermeldung, d.h. ein Fehler kann gesetzt werden, so daß der Fahrer des Kraftfahrzeuges entsprechend gewarnt werden kann.

Ein weiterer Vorteil des hier dargestellten Sensorik-Systems 1 ist es, daß mit Hilfe des Steuergerätes bzw. der einem Getriebesteuergerät vorgeschalteten Prozessoreinheit immer der sicherste Fahrzustand innerhalb des Getriebes eingelegt werden kann, auch wenn der Schalt-Wählhebel 3 eine "Zwischenposition" einnimmt. Nimmt der Schalt-Wählhebel 3 beispielsweise eine "Zwischenposition" zwischen der Position Neutral N und der Position Rückwärts R ein, so wird diese "Zwischenposition" vom Steuergerät registriert, im Getriebe aber die Neutralstellung aus Sicherheitsgründen realisiert. Für den Fall, daß beispielsweise der Schalt-Wählhebel 3 eine Position zwischen der Position Vorwärts E und der Position Neutral N einnimmt, wird im Getriebe ebenfalls der Schaltzustand Neutral, also die Neutralstellung realisiert, da vermieden werden sollte, daß das Fahrzeug beispielsweise unbeabsichtigt einen Vorwärtsgang einlegt. Anders ausgedrückt, durch die Ermittlung auch der "Zwischenposition" des Schalt-Wählhebels 3 kann auch bei einer "Zwischenposition" des Schalt-Wählhebels 3 immer der sicherste Fahrzustand oder Schaltzustand im Getriebe eingelegt werden, wobei Schaltprobleme eliminiert werden.

### Bezugszeichenliste

- 1: Sensorik-System
- 2: Schaltgasse
- 3: Schalt-Wählhebel
- 4: Endgasse
- 5: Quergasse
- 6: Tippgasse
- 7: Erfassungs-Überlappungsbereich
- 8: Erfassungs-Überlappungsbereich
- 9: Erfassungs-Überlappungsbereich
- 10: Erfassungs-Überlappungsbereich
- 11: Haupt-Meßspur
- 12: Redundanz-Meßspur
- 13: Erfassungs-Überlappungsbereich
- E1, E2, N1, R1: erste Sensorelemente
- A: erster Signalgeber
- E3, N2, R2: zweite Sensorelemente
- R: zweiter Signalgeber
- G1, G2, G3: dritte Sensorelemente
- Magnet G1: dritter Signalgeber
- Magnet G2: dritter Signalgeber

## Patentansprüche

1. Sensorik-System (1) für die Steuereinrichtung eines automatisch schaltbaren Getriebes, insbesondere für ein automatisiertes Handschaltgetriebe, mit einem in zumindest einer Schaltgasse (2) bewegbaren Schalt-Wählhebel (3) zur Einstellung zumindest der Positionen Vorwärts (E), Neutral (N), Rückwärts (R), vzw. zur zusätzlichen Einstellung einer Parksperre (Stop), vzw. einer Position (M) für manuelle Schaltungen und zumindest einer Position (+) zum manuellen Hochschalten bzw. einer Position (-) zum manuellen Herunterschalten der Getriebegänge, wobei zur Ermittlung der Stellung des Schalt-Wählhebels (3) jeder Positionsmöglichkeit (E, N bzw. R) mindestens ein erstes Sensorelement (E1, E2, N1, R1) zugeordnet ist und am Schalt-Wählhebel (3) mindestens ein erster Signalgeber (A) angeordnet ist, **dadurch gekennzeichnet, dass** die ersten Sensorelemente (E1, E2, N1, R1) und/oder der erste Signalgeber (A) so ausgebildet und angeordnet sind, daß auch die Positionierung des Schalt-Wählhebels (3) zumindest zwischen den Positionen Vorwärts (E), Neutral (N) und/oder Rückwärts (R) ermittelbar ist und dass durch die ersten Sensorelemente (E1, E2, N1, R1) eine Haupt-Meßspur (11) und durch zweite Sensorelemente (E3, N2, R2) eine Redundanz-Meßspur (12) gebildet ist.

2. Sensorik-System nach Anspruch 1, **dadurch gekennzeichnet, daß** die ersten Sensorelemente (E1, E2, N1, R1) als Hall-Positionsgeber und der erste Signalgeber (A) als Permanentmagnet (Magnet A) ausgebildet ist.

3. Sensorik-System nach Anspruch 1 oder 2, **dadurch gekennzeichnet, daß** aufgrund der Dimensionierung und/oder Ausbildung der ersten Sensorelemente (E1, E2, N1, R1) und/oder des ersten Signalgebers (A) Erfassungs-Überlappungsbereiche (7, 8) zwischen den Positionen Vorwärts (E) und Neutral (N) sowie zwischen den Positionen Neutral (N) und Rückwärts ( R) ausgebildet sind.

4. Sensorik-System nach Anspruch 1, **dadurch gekennzeichnet, daß** jeder Positionsmöglichkeit (E, N bzw. R) des Schalt-Wählhebels (3) zweite Sensorelemente (E3, N2, R2) zugeordnet sind und zusätzlich ein zweiter Signalgeber (R) am Schalt-Wählhebel (3) angeordnet ist.

5. Sensorik-System nach Anspruch 4, **dadurch gekennzeichnet, daß** die zweiten Sensorelemente (E3, N2, R2) als Hall-Positionsgeber und der zweite Signalgeber (R) als Permanentmagnet (Magnet R) ausgebildet ist.

6. Sensorik-System nach Anspruch 4 oder 5, **dadurch gekennzeichnet, daß** aufgrund der Dimensionierung und/oder Ausbildung der zweiten Sensorelemente (E3, N2, R2) und/oder des zweiten Signalgebers (R) Erfassungs-Überlappungsbereiche (9, 10) zwischen den Positionen Vorwärts (E) und Neutral (N) sowie zwischen den Positionen Neutral (N) und Rückwärts (R) ausgebildet sind.

7. Sensorik-System nach Anspruch 1, **dadurch gekennzeichnet, daß** die ersten und zweiten Sensorelemente (E1, E2, E3, N1, N2, R1, R2) an einer Platine angeordnet sind.

8. Sensorik-System nach Anspruch 1 oder 7, **dadurch gekennzeichnet, daß** der Schalt-Wählhebel (3) über eine Quergasse (5) in die Tippgasse (6) bewegbar ist und für die Position zum Hochschalten (+) bzw. zum Herunterschalten (-) jeweils ein erstes Sensorelement (E1, E2) vorgesehen ist.

9. Sensorik-System nach Anspruch 8, **dadurch gekennzeichnet, daß** die Platine in Richtung der Quergasse (5) innerhalb des Schalt-Wählhebelgehäuses bewegbar angeordnet ist.

10. Sensorik-System nach Anspruch 8, **dadurch gekennzeichnet, daß** die Positionierung des Schalt-Wählhebels (3) innerhalb der Quergasse (5) über dritte Sensorelemente (G1, G2, G3) und dritte Signalgeber (Magnet G1, Magnet G2) ermittelbar ist.

11. Sensorik-System nach Anspruch 10, **dadurch gekennzeichnet, daß** die dritten Sensorelemente (G1, G2, G3) als Hall-Positionsgeber und die dritten Signalgeber (Magnet G1, Magnet G2) als Permanentmagnete ausgebildet sind.

12. Sensorik-System nach Anspruch 10 oder 11, **dadurch gekennzeichnet, daß** die dritten Sensorelemente (G1, G2, G3) an der Platine und die dritten Signalgeber (Magnet G1, Magnet G2) am Schalt-Wählhebelgehäuse angeordnet sind.

13. Sensorik-System nach Anspruch 10, **dadurch gekennzeichnet, daß** durch die dritten Sensorelemente (G1, G2, G3) und durch die dritten Signalgeber (Magnet G1, Magnet G2) auch ein Erfassungs-Überlappungsbereich (13) ausgebildet ist.

14. Sensorik-System nach Anspruch 1, **dadurch gekennzeichnet, daß** das Sensorik-System auf elektronischer Basis realisiert ist und die Sensorelemente (E1, E2, E3, N1, N2, R1, R2, G1, G2, G3) mit einem Steuergerät schaltungstechnisch verbunden sind.

15. Sensorik-System nach Anspruch 14, **dadurch gekennzeichnet, daß** mit Hilfe des Steuergerätes ein gestörtes und/oder funktionsuntüchtiges Sensorelement (E1, E2, E3, N1, N2, R1, R2, G1, G2, G3) und/oder ein Kurzschluß in der diesem Sensorelement ermittelbar ist.

16. Sensorik-System nach Anspruch 14 oder 15, **dadurch gekennzeichnet, daß** das Steuergerät als eine in dem Schalt-Wählhebelgehäuse integrierbare Prozessoreinheit ausgeführt ist.

17. Sensorik-System nach Anspruch 16, **dadurch gekennzeichnet, daß** die Prozessoreinheit in das Schalt-Wählhebelgehäuse integriert und einem Getriebesteuergerät vorgeschaltet ist.

## Claims

1. Sensor engineering system (1) for the control device of an automatically engaging and disengaging transmission, in particular for an automated manual transmission, with a gear shift selection lever (3) movable in at least one shift channel (2) for setting at least the positions forwards (E), neutral (N), reverse (R), preferably for additional setting of a parking brake (stop), preferably a position (M) for manual shifting of gears and at least one position (+) for manual shifting up or a position (-) for manual shifting down of the gears, wherein for detecting the position of the gear shift selection lever (3) at least one first sensor element (E1, E2, N1, R1) is allocated to each possible position (E, N or R) and at least one first signal transmitter (A) is arranged on the gear shift selection lever (3), **characterised in that** the first sensor elements (E1, E2, N1, R1) and/or the first signal transmitter (A) are constructed and arranged in such a way that the positioning of the gear shift selection lever (3) is also detectable at least between the positions forwards (E), neutral (N) and/or reverse (R) and **in that** a main measuring track (11) is formed by the first sensor elements (E1, E2, N1, R1) and a redundancy measuring track (12) by second sensor elements (E3, N2, R2).

2. Sensor engineering system according to claim 1, **characterised in that** the first sensor elements (E1, E2, N1, R1) are constructed as Hall position transmitters and the first signal transmitter (A) is constructed as a permanent magnet (magnet A).

3. Sensor engineering system according to claim 1 or 2, **characterised in that**, owing to the dimensioning and/or construction of the first sensor elements (E1, E2, N1, R1) and/or of the first signal transmitter (A), recording overlap areas (7, 8) are formed between the positions forwards (E) and neutral (N) and also between the positions neutral (N) and reverse (R).

4. Sensor engineering system according to claim 1, **characterised in that** second sensor elements (E3, N2, R2) are allocated to each possible position (E, N or R) of the gear shift selection lever (3) and additionally a second signal transmitter (R) is arranged on the gear shift selection lever (3).

5. Sensor engineering system according to claim 4, **characterised in that** the second sensor elements (E3, N2, R2) are constructed as Hall position transmitters and the second signal transmitter (R) is constructed as a permanent magnet (magnet R).

6. Sensor engineering system according to claim 4 or 5, **characterised in that**, owing to the dimensioning and/or construction of the second sensor elements (E3, N2, R2) and/or of the second signal transmitter (R), recording overlap areas (9, 10) are formed between the positions forwards (E) and neutral (N) and also between the positions neutral (N) and reverse (R).

7. Sensor engineering system according to claim 1, **characterised in that** the first and second sensor elements (E1, E2, E3, N1, N2, R1, R2) are arranged on a printed circuit board.

8. Sensor engineering system according to claim 1 or 7, **characterised in that** the gear shift selection lever (3) is movable via a transverse channel (5) into the touch control channel (6) and a first sensor element (E1, E2) is provided in each case for the position for shifting up (+) or for shifting down (-).

9. Sensor engineering system according to claim 8, **characterised in that** the printed circuit board is arranged as movable in the direction of the transverse channel (5) within the gear shift selection lever housing.

10. Sensor engineering system according to claim 8, **characterised in that** the positioning of the gear shift selection lever (3) can be detected within the transverse channel (5) via third sensor elements (G1, G2, G3) and third signal transmitters (magnet G1, magnet G2).

11. Sensor engineering system according to claim 10, **characterised in that** the third sensor elements (G1, G2, G3) are constructed as Hall position transmitters and the third signal transmitters (magnet G1, magnet G2) as permanent magnets.

12. Sensor engineering system according to claim 10 or 11, **characterised in that** the third sensor elements (G1, G2, G3) are arranged on the printed circuit board and the third signal transmitters (magnet G1, magnet G2) on the gear shift selection lever housing.

13. Sensor engineering system according to claim 10, **characterised in that** a recording overlap area (13) is also formed by the third sensor elements (G1, G2, G3) and the third signal transmitters (magnet G1, magnet G2).

14. Sensor engineering system according to claim 1, **characterised in that** the sensor engineering system is implemented on an electronic basis and the sensor elements (E1, E2, E3, N1, N2, R1, R2, G1, G2, G3) are connected by transmission engineering to a control device.

15. Sensor engineering system according to claim 14, **characterised in that** with the aid of the control device a disturbed sensor element (E1, E2, E3, N1, N2, R1, R2, G1, G2, G3) and/or one which is unfit to function and/or a short circuit in this sensor element can be detected.

16. Sensor engineering system according to claim 14 or 15, **characterised in that** the control device is embodied as a processor unit which can be integrated in the gear shift selection lever housing.

17. Sensor engineering system according to claim 16, **characterised in that** the processor unit is integrated into the gear shift selection lever housing and switched upstream a transmission control device.

## Revendications

1. Système de capteurs (1) pour le dispositif de commande d'une boîte de vitesses automatique, en particulier pour une boîte de vitesses manuelle automatique, avec un levier sélecteur de changement (3) mobile dans au moins une grille de changement (2) pour régler au moins les positions de marche avant (E), de point mort (N), de marche arrière (R), de préférence pour régler également un frein de stationnement (Stop), de préférence une position (M) pour des changements de vitesse manuels et au moins une position (+) pour le passage manuel à la vitesse supérieure ou une position (-) pour le passage manuel à la vitesse inférieure des vitesses de la boîte, dans lequel, pour déterminer la position du levier sélecteur de changement (3), à chaque position possible (E, N ou R), au moins un premier élément de capteur (E1, E2, N1, R1) est affecté et au moins un premier transmetteur de signal (A) est disposé sur le levier sélecteur de changement (3), **caractérisé en ce que** les premiers éléments de capteur (E1, E2, N1, R1) et/ou le premier transmetteur de signal (A) sont réalisés et disposés de telle sorte qu'il est également possible de déterminer le positionnement du levier sélecteur de changement (3) au moins entre les positions de marche avant (E), de point mort (N) et/ou de marche arrière (R) et **en ce que** les premiers éléments de capteur (E1, E2, N1, R1) forment une piste de mesure principale (11) et les deuxièmes éléments de capteur (E3, N2, R22) forment une piste de mesure redondante (12).

2. Système de capteurs selon la revendication 1, **caractérisé en ce que** les premiers éléments de capteur (E1, E2, N1, R1) sont réalisés comme des transmetteurs de position Hall et le premier transmetteur de signal (A) est réalisé comme un aimant permanent (Aimant A).

3. Système de capteurs selon la revendication 1 ou 2, **caractérisé en ce que** grâce au dimensionnement et/ou à la réalisation des premiers éléments de capteur (E1, E2, N1, R1) et/ou du premier transmetteur de signal (A), des zones de recouvrement de détection (7, 8) sont réalisées entre les positions de marche avant (E) et de point mort (N) ainsi qu'entre les positions de point mort (N) et de marche arrière (R).

4. Système de capteurs selon la revendication 1, **caractérisé en ce qu'**à chaque position possible (E, N ou R) du levier sélecteur de changement (3), des deuxièmes éléments de capteur (E3, N2, R2) sont affectés et en plus un deuxième transmetteur de signal (R) est disposé sur le levier sélecteur de changement (3).

5. Système de capteurs selon la revendication 4, **caractérisé en ce que** les deuxièmes éléments de capteur (E3, N2, R2) sont réalisés comme des transmetteurs de position Hall et le deuxième transmetteur de signal (R) est réalisé comme un aimant permanent (Aimant R).

6. Système de capteurs selon la revendication 4 ou 5, **caractérisé en ce que** grâce au dimensionnement et/ou à la réalisation des deuxièmes éléments de capteur (E3, N2, R2) et/ou du deuxième transmetteur de signal (R), des zones de recouvrement de détection (9, 10) sont réalisées entre les positions de marche avant (E) et de point mort (N) ainsi qu'entre les positions de point mort (N) et de marche arrière (R).

7. Système de capteurs selon la revendication 1, **caractérisé en ce que** les premiers et deuxièmes éléments de capteur (E1, E2, E3, N1, N2, R1, R2) sont disposés sur une platine.

8. Système de.capteurs selon la revendication 1 ou 7, **caractérisé en ce que** le levier sélecteur de changement (3) est mobile à travers une grille transversale (5) dans la grille à impulsion (6), et pour la position destinée au passage à la vitesse supérieure (+) ou au passage à la vitesse inférieure (-), un premier élément de capteur (E1, E2) est prévu, respectivement.

9. Système de capteurs selon la revendication 8, **caractérisé en ce que** la platine est disposée de façon mobile en direction de la grille transversale (5) à l'intérieur du boîtier de levier sélecteur de changement.

10. Système de capteurs selon la revendication 8, **caractérisé en ce que** le positionnement du levier sélecteur de changement (3) à l'intérieur de la grille transversale (5) peut être déterminé par des troisièmes éléments de capteur (G1, G2, G3) et des troisièmes transmetteurs de signal (Aimant G1, Aimant G2).

11. Système de capteurs selon la revendication 10, **caractérisé en ce que** les troisièmes éléments de capteur (G1, G2, G3) sont réalisés comme des transmetteurs de position Hall et les troisièmes transmetteurs de signal (Aimant G1, Aimant G2) sont réalisés comme des aimants permanents.

12. Système de capteurs selon la revendication 10 ou 11, **caractérisé en ce que** les troisièmes éléments de capteur (C1, G2, G3) sont disposés sur la platine et les troisièmes transmetteurs de signal (Aimant G1, Aimant G2) sont disposés sur le boîtier de levier sélecteur de changement.

13. Système de capteurs selon la revendication 10, **caractérisé en ce que** les troisièmes éléments de capteur (G1, G2, G3) et les troisièmes transmetteurs de signal (Aimant G1, Aimant G2) réalisent également une zone de recouvrement de détection (13).

14. Système de capteurs selon la revendication 1, **caractérisé en ce que** le système de capteurs est réalisé par électronique et les éléments de capteur (E1, E2, E3, N1, N2, R1, R2, G1, G2, G3) sont reliés à un dispositif de commande par des moyens de circuit.

15. Système de capteurs selon la revendication 14, **caractérisé en ce que** le dispositif de commande permet de déterminer un élément de capteur (E1, E2, E3, N1, N2, R1, R2, G1, G2, G3) perturbé et/ou inopérant et/ou un court-circuit dans cet élément de capteur.

16. Système de capteurs selon la revendication 14 ou 15, **caractérisé en ce que** le dispositif de commande est réalisé comme une unité à processeur pouvant être intégrée dans le boîtier de levier sélecteur de changement.

17. Système de capteurs selon la revendication 16, **caractérisé en ce que** l'unité à processeur est intégrée dans le boîtier de levier sélecteur de changement et est placée en amont d'un dispositif de commande de boîte de vitesses.
